(19) Europäisches Patentamt
European Patent Office
Office européen des brevets

(11) Publication number: **0 066 741**
**B1**

(12) **EUROPEAN PATENT SPECIFICATION**

(45) Date of publication of patent specification: **26.10.88**

(21) Application number: **82104340.3**

(22) Date of filing: **18.05.82**

(51) Int. Cl.$^4$: **C 08 L 23/00**, C 08 K 3/00, C 08 J 3/20

(54) **Polyolefin series composition.**

(30) Priority: **20.05.81 JP 77209/81**

(43) Date of publication of application:
**15.12.82 Bulletin 82/50**

(45) Publication of the grant of the patent:
**26.10.88 Bulletin 88/43**

(84) Designated Contracting States:
**DE FR GB**

(56) References cited:
**EP-A-0 028 085**
**GB-A-2 010 281**

(73) Proprietor: **Matsushita Electric Industrial Co., Ltd.**
**1006, Oaza Kadoma**
**Kadoma-shi Osaka-fu, 571 (JP)**

(72) Inventor: **Funakoshi, Yasutomo**
**1230, Nagasone-cho**
**Sakai-shi Osaka-fu 591 (JP)**
Inventor: **Iwami, Fumio**
**36-16, Yamadaikehigashimachi Hirakata-shi**
**Osaka-fu 573-01 (JP)**
Inventor: **Sakairi, Tadashi**
**7-28, Hoshidayamate 4-chome Katano-shi**
**Osaka-fu 576 (JP)**
Inventor: **Wakahata, Tamotsu**
**13-3, Aoyama 3-chome Katano-shi**
**Osaka-fu 576 (JP)**

(74) Representative: **Eisenführ & Speiser**
**Martinistrasse 24**
**D-2800 Bremen 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 066 741 B1

## Description

The invention relates to a polyolefin composition produced from a polyolefin, an organic silane series compound, an organic peroxide, an antioxidant and a filler.

Generally, a polyolefin composition wherein polyolefin is combined with an inorganic filler shows improved rigidity and heat-resistance, but considerably reduced mechanical strength, particularly impact resisting strength, which results in a big problem in practical use. Also, as the blending amount of the inorganic filler against polyolefin increases, the fluidity of the polyolefin is considerably impaired and the appearance of molded goods produced thereby is very poor; this increase of filler amount thus being impractical.

As a method of overcoming these disadvantages, it was devised that after the inorganic filler had been treated on its surfaces by paraffin series hydrocarbon, high-class fatty acid, metallic soap or the like, it could be better incorporated into the polyolefin. However, by this method, the appearance of the goods produced could be somewhat improved, but the mechanical strength thereof could not be improved.

Then, another method was devised of packing the inorganic filler into the polyolefin after the inorganic filler had been treated on its surfaces with an organic silane series compound or an organic titanium series compound. According to this method, the appearance of the goods produced was considerably improved, but the mechanical strength was insufficiently improved.

A further method consisted of previously producing denatured propylene polymer, wherein unsaturated compounds having carboxyl groups therein are graft-polymerized, and surface treating the inorganic filler with an organic silane compound, thereby to heat and reinforce both of them. However, this method has the following disadvantages:

1. Since the denatured polypropylene is required to be produced in advance, heating, mixing and kneading processes require a Banbury type mixer, an extruding machine, etc. to provide the denatured polypropylene. The denatured propylene thus provided becomes extremely expensive, so that the economical advantage of using polypropylene, which is used because of its lower price, is lost.

2. Since the polypropylene undergoes heating at two stages, where the denatured polypropylene is provided and where the inorganic filler is further added for the mixing and kneading operation, the material deteriorates, its color is changed due to decreased molecular weight, resulting in problems in practical use.

3. The denatured polypropylene itself exhibits extremely increased tackiness, so that when the inorganic filler is added to the denatured polypropylene, the dispersibility of the inorganic filler becomes worse with increased blending quantity, resulting in that the extruding operation is strongly adversely affected.

From GB—A—2 010 281, a composition of the initially mentioned kind is known. This composition is produced by mixing an organic peroxide, an antioxidant and an organic silane series compound with a polyolefine, the polyolefine composition being cross-linked by an additional step. The composition may contain pigments which act as a filler and is used for making pipes. The polyolefin contains a copolymer. No pre-treatment of polymer or filler surfaces is envisaged.

From EP—A—0 028 085, as method for modifying polyolefins is known, which comprises adding an unsaturated carboxylic acid or acid anhydride to a polyolefin by known methods and combining the thus obtained polyolefin with an inorganic filler and an antioxidant. Also in the course of this method, no surface pre-treatment of polymer or filler is considered.

Neither of these prior art methods achieves mutual bonding of polymer and filler by heating in the presence of antioxidant and a dispersion agent.

Accordingly, an object of the present invention is to provide a polyolefin composition of the initially mentioned kind without the disadvantages inherent in the conventional composition and superior in mechanical strength and heat-resistance.

Another object of the present invention is to provide a polyolefin composition showing matter property and heat-resistance, which are extremely superior as compared with a conventional case where the denatured polyolefin was manufactured in advance.

Painstaking researches to overcome the disadvantages of the prior art methods have led to the present invention.

According to the invention, the polyolefine composition contains an inorganic calcium silicate filler, a dispersion agent and an antioxidant. It is obtained by heating and interfacial bonding a uniformly blended mixture of the polyolefin and the filler together with the dispersion agent and the antioxidant, the polyolefin and the filler being coated with an organic silane series compound and the coating of the filler or the polyolefin also containing an organic peroxide, the blending amount of the filler being 15—80% by weight, and the organic silane series compound being at least one of the kind containing an ethylene non-saturated bond, an epoxy group or an amino group.

The polyolefin composition of the present invention has the following advantages:

1) No denatured polyolefin is required to be produced in advance and, since a heating, polymerizing process by a Banbury type mixer, an extruding machine or the like will do at one stage, an inexpensive interfacial polymerizing polyolefin composition can be provided, resulting in an extremely high economical benefit.

2) Since the heating, polymerizing process by the Banbury type mixer, the extruding machine or the

like is performed at one stage, the polyolefin undergoes only one heating operation. Thus, the matter property does not deteriorate and the color is not changed due to decreased molecular weight. Accordingly, a polyolefin composition markedly superior in mechanical strength is provided.

3) The heating, interfacial polymerization is performed by the Banbury type mixer, the extruding machine or the like in the presence of dispersion agent and antioxidant. The oxidation deterioration of the polyolefin during the heating fusion can be prevented by antioxidant present uniformly around the polyolefin and, thus, a polyolefin composition of extremely high heat-resistance is provided.

4) Since the heating, interfacial polymerization is performed by the Banbury type mixer, the extruding machine or the like in the presence of the dispersion agent and the antioxidant, tackiness of denatured polyolefin can be prevented by the dispersion agent and thus, a polyolefin composition extremely uniformly dispersed in the inorganic filler can be provided, even if the blended amount of the inorganic filler increases.

The object and other objects, features, aspects, and advantages of the present invention will become more apparent from the following detailed description of preferred embodiments according to the present invention when taken in conjunction with the accompanying drawings.

Fig. 1 and Fig. 2 are graphs showing the results of the heat resistance tests respectively at 124°C and 142°C for embodiments of the present invention.

The polyolefin to be used in the present invention is chosen from ethylene polymer, propylene polymer, ethylene-propylene random copolymer, ethylene-propylene block copolymer or the like. One of them will be employed.

The inorganic filler to be used in the present invention is calcium silicate.

As the organic silane series compound to be used in the present invention, the following compounds will be suitable:

$CH_2 = CHSiC\ell_3$, $CH_2 = CHSi(OCH_2CH_3)_3$,

$CH_2 = CHSi(OCH_2CH_2OCH_3)_3$,

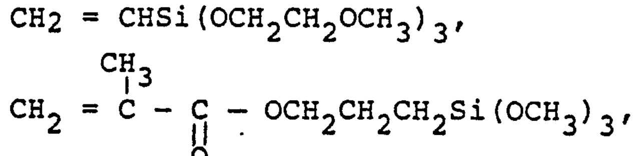

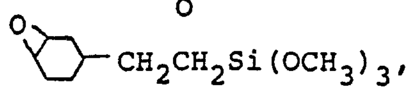

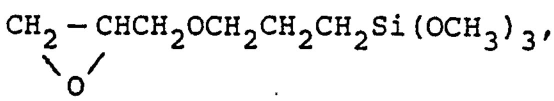

$NH_2CH_2CH_2CH_2Si(OCH_2CH_3)_3$,

$NH_2CH_2CH_2NHCH_2CH_2CH_2Si(OCH_3)_3$,

$NH_2CONHCH_2CH_2CH_2Si(OCH_2CH_3)_3$,

and so on.

The organic peroxide to be used in the present invention is benzoyl peroxide, dicumyl peroxide or the like.

The amount used of the organic peroxide is preferable to stay within 0,01 through 1,0% by weight with respect to the polyolefin. The reaction efficiency of the organic silane series compound is lower in a case where the amount is 0,01% or less by weight. The property of matter or the color is adversely affected by deterioration of the polyolefin in a case where the amount is 1,0% or more by weight.

The dispersion agent used in the present invention will do if the gliding effect is high, and high-class fatty acid, metallic soap, fatty acid amide or the like can be used.

The amount used of the dispersion agent is preferable to be 0,05 through 3,0% by weight. The desired gliding effect is not provided in the heating interfacial polymerization when the amount is 3,0% by weight, while the matter property of the polyolefin composition provided is undesirably injured when the amount is 3,0% or more by weight.

As the antioxidant used in the present invention, there can be employed a combination of one kind, two kinds or more from phenol series antioxidant, thioester series antioxidant, phosphorus series antioxidant generally used for polyolefins.

The amount used of the antioxidant is preferable to stay within the range of 0,01 through 3,0% by weight. The oxidation of the polyolefin is not prevented during the heating interfacial polymerization when the amount is 0,01% or less by weight. The oxidation deterioration preventing effect remains unchanged when the amount is 3,0% or more by weight and thus, an excess is economically undesirable.

According to the invention, a mixture, wherein polyolefin and inorganic filler coated previously with the organic silane series compound and organic peroxide are uniformly blended, is heated and interfacially bonded in the presence of the dispersion agent and the antioxidant. More particularly, the organic silane series compound is caused to be chemically combined on the interface between the polyolefin and the inorganic filler in the heating process of one stage in the presence of the dispersion agent and the antioxidant.

The organic silane series compound which will contribute towards such reaction has a functional group such as a methoxy group, chloro group or ethoxy group which can react with the inorganic filler, and furthermore can react with the polyolefin. The organic silane series compound has a functional group such as vinyl group, methacryloxy group, amino group, cyclic epoxy group, glycidoxy group, mercapto group etc. Preferable, the organic silane series compound is provided with methacryloxy group, vinyl group, amino group, methoxy group, ethoxy group etc.

The polyolefin and the inorganic filler are coated with the organic silane series compound, which coating operation can be effected by the use of a Henschel mixer, a ribbon blender, a ball mill, etc., and can be performed even at normal temperatures. The coating operation can be more uniformly effected at high temperatures of 30 through 150°C.

In a first embodiment of the invention, the organic silane series compound and the organic peroxide, which have been dissolved in advance, with organic solvent, and polyolefin are uniformly blended by the Henschel mixer, the ribbon blender, the ball mill or the like. Organic solvents of boiling point 30°C through 80°C are employed. The blending operation is preferably performed at 30°C through 80°C where solvent activation and evaporation can be performed at the same time.

Then, the dispersion agent, the antioxidant and the inorganic filler coated previously with the organic silane series compound are thrown into the mixture for uniform blending operation.

In another preferred embodiment, the organic silane compound dissolved or dispersed previously in the organic solvent, and the polyolefin are uniformly blended by a Henschel mixer, a ribbon blender, a ball mill or the like. The organic silane series compound dissolved or dispersed in the organic solvent, and the organic peroxide are uniformly mixed, by a Henschel mixer, a ribbon blender, a ball mill or the like, with the inorganic filler. Then, the dispersion agent, the antioxidant, the above-described treated polyolefin and the treated inorganic filler are uniformly mixed by a Henschel mixer, a ribbon blender, a ball mill or the like. The blending operation is better to be performed at 30°C through 80°C as in the mixture 1.

The mixture of the organic silane compound, the coated polyolefin and inorganic filler, the organic peroxide, the dispersion agent and the antioxidant, which are provided in such manner as described hereinabove is heated, blended and kneaded. The organic silane series compound is chemically combined, in a heating process of one stage in the presence of the dispersion agent and the antioxidant, on the interface of the polyolefin and the inorganic filler, resulting in a polyolefin composition which is superior in mechanical strength and heat-resistance. A Banbury type mixer, heat roll, extruding machine or the like is usable as the heating, mixing and kneading machine and the extruding machine is suitable in terms of economy.

When the blended amount of the inorganic filler material is 10% or less by weight, the heat resistance, rigidity, etc. are not improved. Also, when the blended amount thereof is 90% or more by weight, the appearance of the molded goods is considerably worse. The blended amount of the inorganic filler is therefore 10 through 80% by weight.

The present invention will be described hereinafter in embodiments.

Embodiments 1 through 3

Calcium silicate as inorganic filler was coated at a temperature of 60°C, by a Henschel mixer, at a ratio of 0,5 part by weight gamma methacryloxy-propyl-trimethoxy-silane dissolved in water adjusted to $pH_3$ through $pH_5$ to 100 parts by weight calcium silicate. After the coating operation, the filler was sufficiently dried.

Uniform blending was effected at 50°C by a Henschel mixer, at a ratio of 0,5 part by weight gamma methacryloxy-propyl-trimethoxy-silane dissolved in dichloromethane and 0,3 part by weight benzoyl peroxide with respect to 100 parts by weight polypropylene powder of MI = 13. In addition, 0,1 part by weight calcium stearate, 0,05 part by weight 2,2'-methylenebis(4-methyl-6-tertiary-butyl-phenol), 0,05 part by weight dilaurilthiodipropionate and calcium silicate coated with gamma methacryloxy-propyl-trimethoxy-silane were added to this mixture and were uniformly blended at 50°C. This mixture was mixed, kneaded and granulated at the resin temperature 210 through 220°C by a double-axle extruding machine of 30 mm in screw diameter thereby to provide pellets. After sufficient drying of the pellets, various types of test pieces were manufactured by injection molding and were examined on various types of matter property. The results of the matter property examination are shown in Table 1, and the results of the heat-resistance tests in the composition of the embodiment 2 are shown in Fig. 1 and Fig. 2.

Table 1 — Results of Matter Property Tests in compositions of Embodiments according to the present invention

| Coated loading material blending amount (% by weight) / Test items | Embodiment 1 | Embodiment 2 | Embodiment 3 |
|---|---|---|---|
| | 30 | 55 | 70 |
| Tensile strength ($kg/cm^2$) | 370 | 410 | 415 |
| Bending strength ($kg/cm^2$) | 590 | 905 | 970 |
| Bending elastic rate ($kg/cm^2$) | 32,000 | 61,000 | 69,000 |
| Izod impact strength ($kg\text{-}cm/cm^2$) (with notch) | 6.5 | 3.3 | 3.0 |

Note) Tensile strength ......... ASTM D-638

Bending strength ......... ASTM D-790

Bending elastic rate ..... ASTM D-790

Izod impact strength ..... ASTM D-256

References 1 through 3

The mixing, kneading operations were effected, as in the embodiments 1 through 3, at a given blending with the calcium silicate and polypropylene powder used in the embodiments 1 through 3. Thereafter, test pieces were manufactured by an injection molding machine and were tested as to property of matter, and the results are shown in Table 2. Also, the results of the heat-resistance tests of the composition of a reference example 2 are shown in Fig. 1 and Fig. 2.

Table 2 — Results of Matter Property Tests in compositions of References as comparison examples with the Embodiments

| Loading material blending amount (% by weight) / Test items | Reference 1 | Reference 2 | Reference 3 |
|---|---|---|---|
| | 30 | 55 | 70 |
| Tensile strength ($kg/cm^2$) | 320 | 305 | 275 |
| Bending strength ($kg/cm^2$) | 530 | 590 | 515 |
| Bending elastic rate ($kg/cm^2$) | 29,000 | 38,000 | 48,000 |
| Izod impact strength ($kg\text{-}cm/cm^2$) (with notch) | 2.0 | 1.8 | 1.1 |

References 4 through 6

The uniform blending operation was performed by a Henschel mixer, at the same blending as that of embodiment 1, with polypropylene powder, organic silane series compound and benzoyl peroxide used in the embodiments 1 through 3. The mixture was heated, mixed, kneaded by a double-axle extruding machine used in the embodiment 1. Thereafter, denaturated polypropylene, which was denatured by the organic silane series compound, was provided. The blending operation was effected, at the very same blending amount at that of the embodiments 1 through 3, with the denatured polypropylene, and gamma methacryloxy propyl-trimethoxy-silane coating calcium silicate, dispersion agent, antioxidant used in the embodiments 1 through 3. Thereafter, the mixture was blended and kneaded again by the double-axle extruding machine thereby to provide the pellets. After the sufficient drying operation of the pellets, various test pieces were manufactured for the matter property tests, and the results are shown in Table 3. Also, the results of heat-resistance tests of the composition of the reference embodiment 5 are shown in Fig. 1 and Fig. 2.

Table 3 — Results of Matter Property Tests in compositions of References as comparison examples with the Embodiments

| Loading material blending amount (% by weight) / Test items | Reference 4 | Reference 5 | Reference 6 |
|---|---|---|---|
| | 30 | 55 | 70 |
| Tensile strength ($kg/cm^2$) | 365 | 380 | 380 |
| Bending strength ($kg/cm^2$) | 570 | 615 | 640 |
| Bending elastic rate ($kg/cm^2$) | 33,000 | 43,000 | 56,000 |
| Izod impact strength ($kg\text{-}cm/cm^2$) (with notch) | 5.7 | 3.7 | 2.9 |

In addition, the other embodiments are shown in embodiments 4 and 5.

Embodiment 4

Gamma methacryloxy-propyl-trimethoxy-silane dissolved in dichloromethane, with the composition of the embodiment 2, benzoyl-peroxide, dispersion agent and antioxidant were uniformly blended, by a Henschel mixer at a temperature of 50°C, with the calcium silicate as used in the embodiments 1 through 3. Then, the mixed solution of the gamma methacryloxy-silane dissolved in dichloromethane was coated, at the temperature of 50°C by a Henschel mixer, onto the surface of the polyolefin. In addition, the above-described treated calcium silicate filler was mixed, at a temperature of 50°C by the Henschel mixer, with the coated polyolefin. The mix was blended, kneaded by a double-axle extruding machine and was granulated to provide pellets. After sufficient drying of the pellets, various test pieces were manufactured for matter property tests, and the results are shown in Table 4.

Table 4 — Results of Matter Property Tests in composition of Embodiment according to the present invention

| Coated loading material blending amount (% by weight) / Test items | Embodiment 4 |
|---|---|
| Coated loading material blending amount (% by weight) | 55 |
| Tensile strength (kg/cm$^2$) | 435 |
| Bending strength (kg/cm$^2$) | 900 |
| Bending elastic rate (kg/cm$^2$) | 62,500 |
| Izod impact strength (kg-cm/cm$^2$) (with notch) | 4.3 |

Embodiment 5

A blended solution wherein 0.5 part by weight gamma methacryloxy-propyl-trimethoxy-silane was dissolved in dichloromethane was added to the inorganic filler used in the embodiments 1 through 3 and was coated at the temperature of 50°C by a Henschel mixer. After the treatment, the filler was sufficiently dried. Then, a blended solution wherein 0.3 part by weight benzoyl-peroxide with respect to 0.3 part by weight gamma methacryloxy-propyl-trimethoxy-silane dissolved in dichloromethane was added to the polyolefin and coated at 50°C by a Henschel mixer. Then, the above-described treated inorganic filler was added, at the blending of the embodiment 2, to the coated polyolefin. In addition, the dispersion agent and antioxidant used in the embodiments 1 through 3 were added thereto. Uniform blending was effected at 50°C. The mixture was blended, kneaded and granulated in the same manner as that of the embodiment 2. Thereafter, pellets were provided. The pellets were used to manufacture the test pieces for matter property tests, and the results are shown in Table 5.

Table 5 Results of Matter Property Tests in composition of Embodiment according to the present invention

| Coated loading material blending amount (% by weight) / Test items | Embodiment 5 |
|---|---|
| | 55 |
| Tensile strength ($kg/cm^2$) | 420 |
| Bending strength ($kg/cm^2$) | 910 |
| Bending elastic rate ($kg/cm^2$) | 61,000 |
| Izod impact strength ($kg\text{-}cm/cm^2$) (with notch) | 3.2 |

As apparent from comparison between the embodiments 1 through 3 and the comparison references 1 through 3, the polyolefin composition of the present invention is provided with extremely better property of matter as compared with the use of the non-treated inorganic filler and non-denatured polyolefin.

Also, as apparent from comparison between the embodiments 1 through 3 and the comparison examples of references 4 through 6, the polyolefin composition of the present invention can be provided with improved matter property as compared with a case where a denatured polyolefin is manufactured in advance.

Also, as apparent from Fig. 1 and Fig. 2, it is found out that the polyolefin composition of the present invention has heat-resistance property extremely better as compared with cases where non-treated inorganic filler and non-denatured polyolefin are used or where the denatured polyolefin is manufactured in advance.

Fig. 1 and Fig. 2 show the results of heat-resistance tests, respectively, at 124°C and 142°C. The bending strength tests of ASTM D-790 were performed to adapt the evaluation by the bending strength retention or the like.

As described hereinabove, the polyolefin composition of the present invention improved matter property and heat-resistance as compared with a case where the denatured polyolefin is manufactured in advance. The reason is that as opposed to the two-stage heating process, thermal oxidation deterioration of the polyolefin can be sharply reduced by heating at one stage in the presence of dispersion agent and anti-oxidant as in the present invention, while thermal oxidation deterioration of the polyolefin is considerably produced already at one stage of heating process wherein the denatured polyolefin is produced.

Thus, according to the composition of the present inventon, it is important to have the dispersion agent and the antioxidant uniformly around the polyolefin. The method will do of uniformly blending the polyolefin, the organic silane series compound and the organic peroxide as shown in the embodiments 1 through 3, and thereafter adding the dispersion agent, the antioxidant and the organic silane series compound coated inorganic filler for uniform blending. However, the method is more advantageous of coating the organic silane series compound, the organic peroxide, the dispersion agent and the antioxidant uniformly onto the polyolefin as shown in embodiment 4, and thereafter adding the organic silane compound coated inorganic filler for uniform blending. This effect is apparent through the comparison of the results of the matter property tests between embodiment 2 and embodiment 4.

**Claims**

1. Polyolefin composition containing an inorganic calcium silicate filler, a dispersion agent and an antioxidant, obtained by heating and interfacial bonding a uniformly blended mixture of the polyolefin and the filler together with the dispersion agent and the antioxidant, the polyolefin and the filler being coated with an organic silane series compound and the coating of the filler or the polyolefin also containing an organic peroxide, the blending amount of the filler being 15—80% by weight, and the organic silane series compound being at least one of the kind containing an ethylene non-saturated bond, an epoxy group or an amino group.

2. Polyolefin composition according to claim 1, in which the polyolefin is coated with a mixture of an organic silane series compound and an organic peroxide, and the filler is coated with an organic silane series compound.

3. Polyolefin composition according to claim 1, in which the polyolefin is coated with an organic silane series compound, and the filler is coated with an organic silane series compound and an organic peroxide.

4. Polyolefin composition according to any one of claims 1—3, in the manufacture of which a Banbury type mixer is used.

5. Polyolefin composition according to any one of claims 1—4, in which at least one kind of epoxy or amino silane series compound is graft-bonded with the polyolefin through organic peroxide.

6. Polyolefin composition according to any one of claims 1—5, containing 0.01—1.0% by weight of the organic peroxide, 0.05—3% by weight of the dispersion agent and 0.01—3.0% by weight of the antioxidant.

7. Polyolefin composition according to any one of claims 1—6, in which the antioxidant used is a combination of one kind, two kinds or more from phenol series antioxidant, thioester series antioxidant and phosphorus series antioxidant.

**Patentansprüche**

1. Polyolefinzusammensetzung, enthaltend einen anorganischen Kalziumsilikat-Füllstoff, ein Dispergiermittel und einen Oxidationsinhibitor, gewonnen durch Erhitzen und Grenzschicht-Verbindung einer einheitlich durchmischten Mischung des Polyolefins und des Füllstoffes zusammen mit dem Dispergiermittel und dem Oxidationsinhibitor, wobei das Polyolefin und der Füllstoff mit einer Verbindung aus der Reihe der organischen Silane überzogen sind und der Überzug des Füllstoffes oder des Polyolefins außerdem ein organisches Peroxid enthält, wobei der Mischungsanteil des Füllstoffes zwischen 15 und 80 Gew.-% liegt und die Verbindung aus der Reihe der organischen Silane wenigstens eine von den Verbindungen der Art ist, die eine ethylenisch ungesättigte Verbindung, eine Epoxygruppe oder eine Aminogruppe enthalten.

2. Polyolefinzusammensetzung nach Anspruch 1, in welcher das Polyolefin mit einer Mischung einer Verbindung aus der Reihe der organischen Silane und eines organischen Peroxids überzogen ist und der Füllstoff mit einer Verbindung aus der Reihe der organischen Silane überzogen ist.

3. Polyolefinzusammensetzung nach Anspruch 1, in welcher das Polyolefin mit einer Verbindung aus der Reihe der organischen Silane überzogen ist und der Füllstoff mit einer Verbindung, aus der Reihe der organischen Silane und einem organischen Peroxid überzogen ist.

4. Polyolefinzusammensetzung nach einem der Ansprüche 1 bis 3, bei deren Herstellung ein Mischer vom Banbury-Typ verwendet wird.

5. Polyolefinzusammensetzung nach einem der Ansprüche 1 bis 4, in welcher wenigstens eine Art einer Epoxyverbindung oder einer Verbindung aus der Reihe der Aminosilane mittels des organischen Peroxids mit dem Polyolefin pfropf-verbunden ist.

6. Polyolefinzusammensetzung nach einem der Ansprüche 1 bis 5, enthaltend 0,01 bis 1,0 Gew.-% des organischen Peroxids, 0,05 bis 3 Gew.-% des Dispergiermittels und 0,01 bis 3,0 Gew.-% des Oxidationsinhibitors.

7. Polyolefinzusammensetzung nach einem der Ansprüche 1 bis 6, in welcher der verwendete Oxidationsinhibitor eine Kombination von einer Art, zwei Arten oder mehreren Arten von Oxidationsinhibitoren aus der Reihe der Phenole, der Reihe der Thioester oder der Reihe der Phosphorverbindungen ist.

**Revendications**

1. Composition de polyoléfine contenant une charge minérale de silicate de calcium, un agent dispersant et un antioxydant, obtenue par chauffage et liaison interfaciale d'un mélange uniforme de la polyoléfine et de la charge ensemble avec l'agent dispersant et l'antioxydant, la polyoléfine et la charge étant revêtues à l'aide d'un composé organique de la série des silanes et le revêtement de la charge ou de la polyoléfine contenant également un peroxyde organique, la quantité de la charge du mélange étant de 15—80% en poids, et le composé organique de la série des silanes est au moins l'un des composés du type contenant une liaison éthyléniquement insaturée, un groupe époxy ou un groupe amino.

2. Composition de polyoléfine selon la revendication 1, selon laquelle la polyoléfine est revêtue à l'aide d'un mélange d'un composé organique de la série des silanes et d'un peroxyde organique, et la charge est revêtue d'un composé organique de la série des silanes.

3. Composition de polyoléfine selon la revendication 1, selon laquelle la polyoléfine est revêtue par un composé organique de la série des silanes, et la charge est revêtue par un composé organique de la série des silanes et par un peroxyde organique.

4. Composition de polyoléfine selon l'une quelconque des revendications 1 à 3, selon laquelle un malaxeur du type Banbury est utilisé dans sa fabrication.

5. Composition de polyoléfine selon l'une quelconque des revendications 1 à 4, selon laquelle au moins un type de composé de la série des époxy ou aminosilanes est lié par greffage à la polyoléfine par l'intermédiaire du peroxyde organique.

6. Composition de polyoléfine selon l'une quelconque des revendications 1 à 5, contenant 0,01—1,0% en poids de peroxyde organique, 0,05—3% en poids d'agent dispersant et 0,01—3,0% en poids d'antioxydant.

7. Composition de polyoléfine selon l'une quelconque des revendications 1 à 6, selon laquelle l'antioxydant utilisé est une combinaison d'un type, de deux types ou plus d'antioxydant de la série des phénols, d'antioxidant de la série des thioesters et d'antioxydant de la série du phosphore.

*Fig. 1*

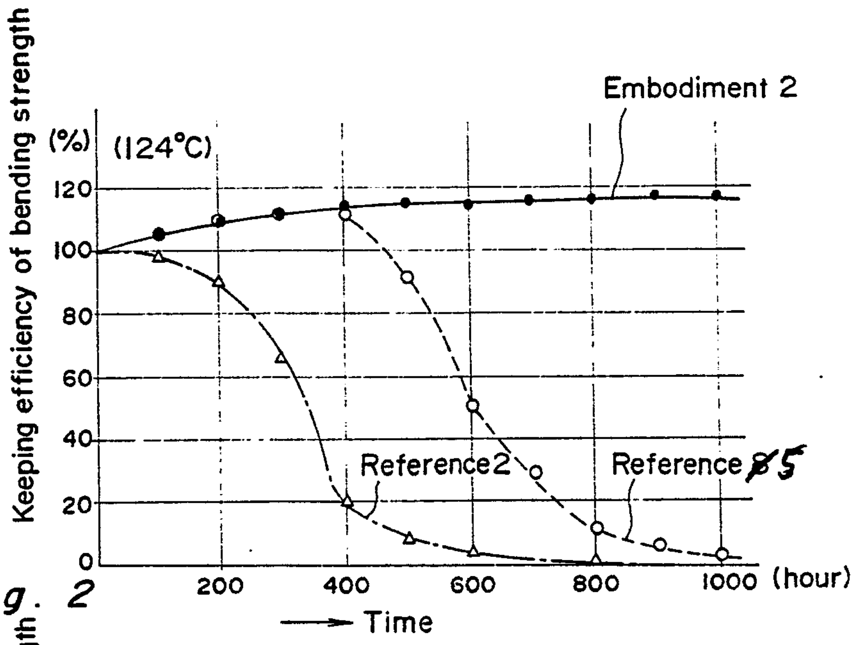
Keeping efficiency of bending strength
(%)
(124°C)
120
100
80
60
40
20
0
200
400
600
800
1000
(hour)
Time
Embodiment 2
Reference2
Reference 5

*Fig. 2*

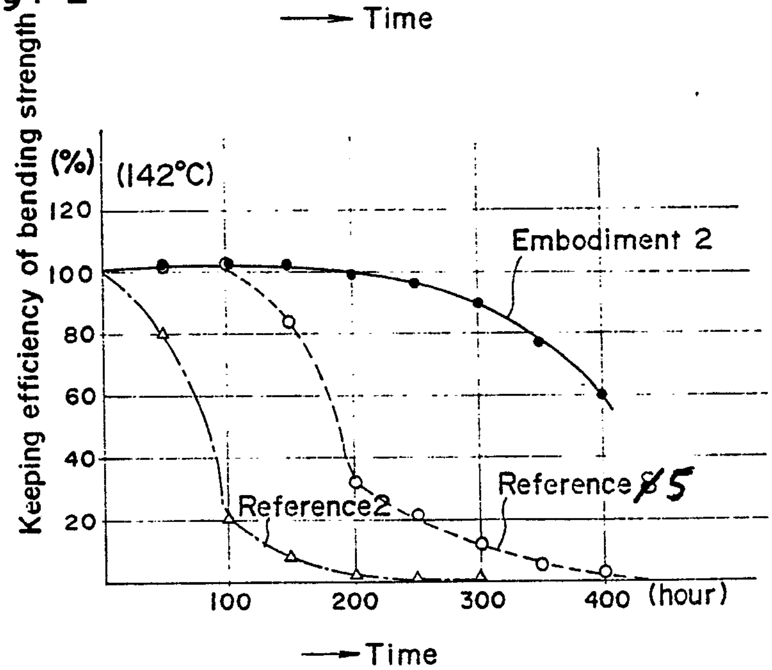
Keeping efficiency of bending strength
(%)
(142°C)
120
100
80
60
40
20
100
200
300
400
(hour)
Time
Embodiment 2
Reference2
Reference 5